# DEMANDE DE BREVET EUROPEEN

(11) **EP 0 920 159 A1**
(43) Date de publication de la demande: **02.06.1999**
(21) Numéro de dépôt: 98402955.3
(22) Date de dépôt: 26.11.1998
(51) Int. Cl.: H04L 12/58, H04L 12/66, H04N 1/00

(54) **Procédé de transmission d'une télécopie entre deux télécopieurs standards à travers un réseau informatique tel que l'Internet et télécopieurs-passerelles pour la mise en oeuvre du procédé**

(30) Priorité: 28.11.1997 FR 9715005
(71) Demandeur: SAGEM SA, 75116 Paris (FR)
(72) Inventeur: Cazin, Dominique, 92150 Suresnes (FR); Castet, Jean-Philippe, 75018 Paris (FR)
(74) Mandataire: Bloch, Gérard

(57) **Abrégé**

Procédé au cours duquel la télécopie et sa destination sont transmises à travers le réseau téléphonique (100) du télécopieur émetteur standard (12) à un télécopieur-passerelle (10), celui-ci rattache la télécopie à un courrier électronique et la télécopie-courrier est retransmise vers une boîte à lettres de transit (11') à travers le réseau informatique (101). Puis, on télécharge la télécopie, rattachée à un courrier électronique, de la boîte à lettres de transit (11') sur un télécopieur-passerelle (10') d'où on la retransmet vers le télécopieur destinataire (12'), à travers le réseau téléphonique (100).

## Description

L'invention concerne la transmission d'une télécopie entre deux télécopieurs distants.

De façon classique, les deux télécopieurs sont reliés à un réseau de téléphonie, par exemple le Réseau Téléphonique Commuté (RTC), et établissent entre eux une communication au cours de laquelle la télécopie est transmise de l'un à l'autre des télécopieurs, à travers le réseau de téléphonie.

On envisage aujourd'hui de transmettre des télécopies à travers des réseaux informatiques, et notamment à travers le réseau de l'Internet, par courrier électronique. Dans ce cas, le télécopieur émetteur rattache la télécopie à un courrier électronique contenant, dans un en-tête, une adresse de destination sur l'Internet qui est celle du télécopieur récepteur, se connecte à l'Internet, généralement par connexion téléphonique à un fournisseur d'accès à l'Internet, et transmet la télécopie-courrier, autrement dit la télécopie rattachée au courrier, vers le télécopieur récepteur.

La transmission d'une télécopie par Internet présente l'avantage d'être bon marché, notamment pour les transmissions à longue distance.

Cependant, les télécopieurs standards, sans capacité de courrier électronique, ne peuvent pas utiliser l'Internet pour la transmission de télécopies.

La demanderesse a donc cherché à pouvoir profiter d'un réseau informatique à communication bon marché à l'aide d'un télécopieur standard.

L'invention concerne un procédé de transmission d'une télécopie d'une boîte à lettres de transit d'un réseau informatique tel que l'Internet vers un télécopieur destinataire standard d'un réseau téléphonique, procédé au cours duquel on télécharge la télécopie rattachée à un courrier électronique de la boîte à lettres de transit sur un télécopieur-passerelle d'où on la retransmet vers le télécopieur destinataire, à travers le réseau téléphonique.

Grâce à cela, on peut recevoir une télécopie transmise par courrier électronique à travers le réseau informatique, à l'aide d'un télécopieur standard.

L'invention concerne encore un télécopieur-passerelle, pour la mise en oeuvre du procédé ci-dessus, agencé pour transmettre vers un télécopieur destinataire standard d'un réseau téléphonique, une télécopie rattachée à un courrier électronique stocké dans une boîte à lettres d'un réseau informatique tel que l'Internet, comprenant un automate de réception agencé pour télécharger la télécopie rattachée au courrier électronique, un automate d'émission agencé pour retransmettre la télécopie vers le télécopieur destinataire.

L'invention sera mieux comprise à l'aide de la description suivante d'une forme de réalisation particulière d'un télécopieur-passerelle et d'un mode de réalisation particulier d'un procédé de transmissiond'une télécopie entre deux télécopieurs standards reliés à un réseau téléphonique, via un réseau informatique, en référence au dessin annexé sur lequel :
- la figure 1 représente une vue schématique de la transmission de la télécopie et
- la figure 2 représente un schéma bloc fonctionnel du télécopieur-passerelle.

Les deux télécopieurs standards 12, 12', côté émission et côté réception, sont respectivement associés à deux télécopieurs-passerelles 10, 10'.

Par télécopieur standard, on entend désigner un télécopieur sans courrier électronique agencé pour être relié à un réseau téléphonique, en l'espèce le réseau téléphonique commuté (RTC) 100.

Le télécopieur standard 12, côté émission, comprend, outre les éléments classiques d'un télécopieur sans courrier électronique, un bloc d'émission agencé pour émettre, avec chaque télécopie transmise au télécopieur-passerelle 10, son identité et une destination de la télécopie, comme cela sera explicité plus loin.

Côté émission, le télécopieur-passerelle 10 fait office de passerelle du réseau RTC 100 vers un réseau informatique, ici l'Internet 101. Côté réception, le télécopieur-passerelle 10' fait office de passerelle de l'Internet 101 vers le RTC 100.

Côté émission, le télécopieur-passerelle 10 dispose d'un accès à l'Internet 101 auprès d'un fournisseur 102 d'accès à l'Internet 101.

Le télécopieur-passerelle 10 comprend un automate de réception 2 et un automate d'émission 9, reliés à un bloc 1 de connexion au réseau RTC 100 comportant un modem. L'automate de réception 2 est destiné à recevoir des télécopies standards, leur destination et l'identité des télécopieurs ayant émis les télécopies.

L'automate de réception 2 est relié à un automate "routeur" 5, avec interposition d'un automate de filtrage 3.Dans l'exemple particulier de la description, l'automate "routeur" 5 est connecté à une mémoire de correspondants 6, et l'automate de filtrage 3 à une mémoire d'utilisateurs 4.

La mémoire de correspondants 6 contient un annuaire de correspondants dans lequel sont répertoriées les identités d'une pluralité de télécopieurs correspondants auxquelles sont associées des indications de routage telles qu'un numéro d'appel téléphonique sur le réseau RTC 100 et/ou une adresse électronique sur l'Internet 101 attribuée soit au télécopieur correspondant lui-même soit à un télécopieur-passerelle associé à un télécopieur correspondant. Ces indications de routage sont destinées à permettre à l'automate "routeur" 5 de déterminer un trajet par lequel il convient d'envoyer une télécopie destinée à l'un des télécopieurs correspondants. L'annuaire de correspondants 6 contient ici l'identité du télécopieur standard récepteur 12' à laquelle est associée l'adresse électronique d'une boîte à lettres 11' du télécopieur-passerelle 10'.

La mémoire d'utilisateurs 4 comprend un annuaire d'utilisateurs dans lequel sont répertoriées les identités d'une pluralité de télécopieurs standards associés au télécopieur-passerelle 10, autrement dit autorisés à utiliser le télécopieur-passerelle 10 comme passerelle de RTC 100 vers l'Internet 101.

L'automate de filtrage 3 est destiné à filtrer les télécopies entrantes en n'autorisant que la retransmission des télécopies transmises depuis l'un des télécopieurs utilisateurs de l'annuaire 4. On notera ici que l'identité du télécopieur standard 12 est contenue dans l'annuaire d'utilisateurs 4.

L'automate d'émission 9 est relié à un automate de préparation d'émission 7 avec interposition d'une mémoire d'émission 8 destinée à contenir des télécopies en attente d'émission.

L'automate de préparation d'émission 7 comporte un programme pour transformer les télécopies standards en "télécopies-courriers", autrement dit à encoder les télécopies à retransmettre suivant un encodage de transport sur l'Internet 101, compatible avec l'Internet 101, et à les rattacher à des courriers électroniques, comme cela sera explicité dans la description du procédé.

Par "télécopie-courrier", on entend désigner un courrier électronique contenant une télécopie rattachée à un en-tête contenant une adresse de destination sur l'Internet.

L'automate d'émission 9 est agencé pour exécuter un protocole de connexion téléphonique au fournisseur d'accès 102 et à transmettre les télécopies-courriers au fournisseur d'accès 102, à travers le réseau RTC 100.

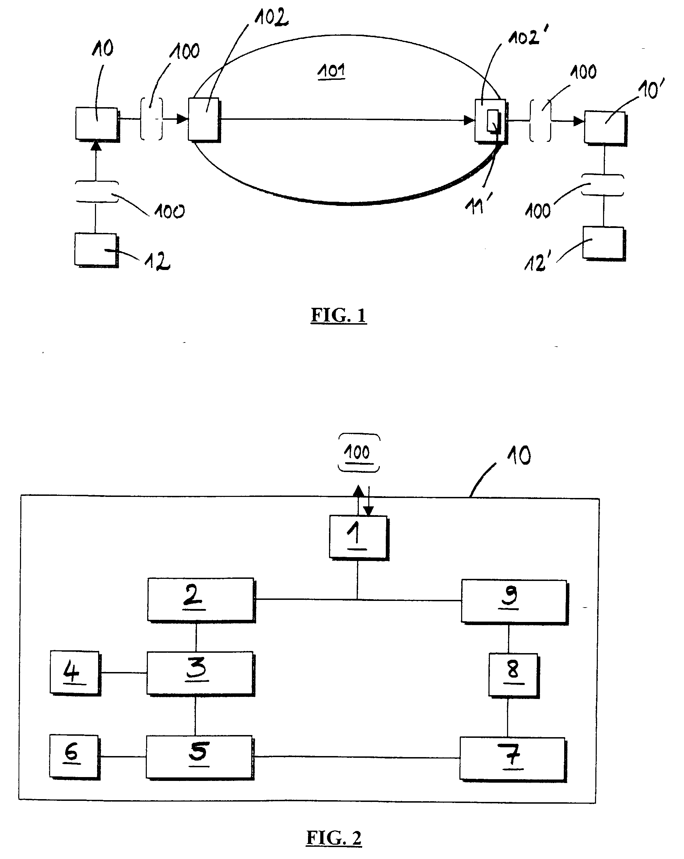

Enfin, le télécopieur-passerelle 10 comprend une interface homme-machine et une unité de contrôle à laquelle tous les éléments du télécopieur-passerelle sont connectés. L'interface homme-machine et l'unité de contrôle ne sont pas représentées sur la figure 2. L'interface homme-machine comporte un clavier de saisie et un écran de visualisation permettant à un utilisateur de saisir les identités des télécopieurs correspondants et celles des télécopieurs utilisateurs, ainsi que les indications de routage.

Le télécopieur-passerelle 10', côté réception, comprend des éléments similaires à ceux décrits ci-dessus du télécopieur-passerelle 10, côté émission, mais différant par ce qui va maintenant être décrit. Par souci de clarté, les éléments du télécopieur-passerelle 10' et les éléments correspondants du télécopieur-passerelle 10 sont désignés par les mêmes références respectivement primées et non primées.

Le télécopieur-passerelle 10' dispose de la boîte à lettres 11', avec son adresse électronique, auprès d'un serveur de courriers 102' de l'Internet 101.

L'automate de réception 2' est agencé pour exécuter un protocole de connexion téléphonique à son serveur de courriers 102' et à télécharger le contenu de la boîte à lettres 11'.

La mémoire d'utilisateurs 4' comprend un annuaire d'utilisateurs dans lequel sont répertoriées les identités d'une pluralité de télécopieurs standards associés au télécopieur-passerelle 10', autrement dit autorisés à utiliser le télécopieur-passerelle 10' comme passerelle de l'Internet 101 vers RTC 100. L'automate de filtrage 3' est destiné à filtrer les télécopies entrantes en n'autorisant que la retransmission des télécopies vers l'un des télécopieurs utilisateurs.

La mémoire de correspondants 6' contient un annuaire de correspondants dans lequel sont répertoriées les identités des télécopieurs utilisateurs auxquelles sont associées des indications de routage comprenant les numéros d'appel téléphonique sur le réseau RTC 100 des télécopieurs utilisateurs. Ces indications de routage sont destinées à permettre à l'automate "routeur" 5' de déterminer l'adresse téléphonique sur le réseau RTC 100 vers laquelle il faut retransmettre une télécopie.

L'automate de préparation d'émission 7' comporte un programme pour transformer les télécopies-courriers téléchargées depuis la boîte à lettres 11' en télécopies standards. La transformation consiste à décoder les télécopies, encodées suivant un encodage de transport sur l'Internet, et à les extraire des courriers auxquels elles sont rattachées.

Enfin, l'automate d'émission 9' est agencé pour émettre des télécopies standards vers des télécopieurs standards, à travers le réseau RTC 100.

Le procédé de transmission d'une télécopie entre les deux télécopieurs standards 12, 12', correspondant aux fonctionnements des télécopieurs-passerelles 10, 10', va maintenant être décrit.

Côté émission, le télécopieur standard 12 établit une communication téléphonique avec le télécopieur-passerelle 10. Le télécopieur émetteur 12 transmet au télécopieur-passerelle 10, à travers le réseau RTC 100, la télécopie standard, son identité et sa destination comprenant ici l'identité du télécopieur récepteur 12' auquel est destinée la télécopie, appelé télécopieur destinataire par la suite.

L'automate de réception 2 du télécopieur-passerelle 10 reçoit la télécopie standard, sa destination et l'identité du télécopieur standard 12 et fournit toutes ces informations à l'automate de filtrage 3. L'automate de filtrage 3 saisit l'identité du télécopieur émetteur 12 et la compare aux identités de son annuaire d'utilisateurs 4. L'identité du télécopieur 12 étant contenue dans l'annuaire 4, l'automate de filtrage 3 autorise la retransmission de la télécopie et fournit la télécopie et sa destination à l'automate "routeur" 5.

L'automate "routeur" 5 saisit l'identité du télécopieur destinataire 12' et la recherche dans son annuaire de correspondants 6. En fonction des indications de routage associées à l'identité du télécopieur 12' dans l'annuaire 6, l'automate "routeur" 5 détermine le trajet par lequel il convient d'envoyer la télécopie. Le télécopieur destinataire 12' étant associé à l'adresse de la boîte à lettres 11' du télécopieur-passerelle 10' sur l'Internet 101, l'automate "routeur" 5 décide de faire transiter la télécopie par l'Internet 101 en l'aiguillant vers la boîte à lettres 11' du télécopieur-passerelle 102', qui, de ce fait, constitue une boîte à lettres de transit.

L'automate "routeur" 5 fournit ensuite à l'automate de préparation d'émission 7, la télécopie, la destination finale de la télécopie comprenant l'identité du télécopieur destinataire 12' et l'adresse électronique de destination de la télécopie sur l'Internet 101, autrement dit l'adresse électronique de la boîte à lettres de transit 11'. L'automate 7 encode la télécopie suivant un encodage de transport sur l'Internet 101, rattache la télécopie encodée à un courrier électronique et indique, dans un en-tête du courrier, l'adresse électronique de destination du courrier sur l'Internet 101, soit l'adresse électronique de la boîte à lettres de transit 11', et la destination finale de la télécopie, soit l'identité du télécopieur destinataire 12'.

Puis, la télécopie-courrier est placée dans la mémoire d'émission 8, en attente d'émission.

Enfin, l'automate d'émission 9 exécute le protocole de connexion téléphonique au fournisseur d'accès 102, et après s'être connecté, transmet au fournisseur d'accès 102 la télécopie-courrier en attente d'émission dans la mémoire d'émission 8. La télécopie-courrier est ensuite acheminée sur l'Internet 101 jusqu'à la boîte à lettres de transit 11' dans laquelle elle est stockée.

Côté réception, l'automate de réception 2' du télécopieur-passerelle 10' exécute le protocole de connexion téléphonique à son serveur de courriers 102', télécharge la télécopie-courrier contenue dans la boîte à lettres 11' et la fournit à l'automate de filtrage 3'.

L'automate de filtrage 3' examine l'en-tête du courrier afin de saisir l'identité du télécopieur destinataire 12', puis compare cette identité aux identités des télécopieurs utilisateurs de l'annuaire d'utilisateurs 4'. L'identité du télécopieur destinataire 12' étant répertoriée dans l'annuaire d'utilisateurs 4', l'automate de filtrage 3' autorise la retransmission de la télécopie rattachée au courrier et la fournit à l'automate "routeur" 5'. L'automate "routeur" 5' saisit également l'identité du télécopieur destinataire 12', la recherche dans l'annuaire de correspondants 6' et saisit le numéro d'appel téléphonique associé.

L'automate "routeur" 5' fournit à l'automate de préparation d'émission la télécopie-courrier et sa destination finale, soit le numéro d'appel téléphonique du télécopieur destinataire 12'.

L'automate de préparation d'émission 7' décode la télécopie rattachée au courrier et l'extrait du courrier, afin de la transformer en une télécopie standard. La télécopie standard et le numéro d'appel téléphonique du télécopieur destinataire 12' sont placés dans la mémoire d'émission 8'.

Enfin, à l'aide du numéro d'appel téléphonique associé à la télécopie à émettre, l'automate d'émission 9' établit une communication téléphonique avec le télécopieur destinataire 12', puis lui transmet la télécopie standard, à travers le réseau RTC 100.

On pourrait envisager de transmettre une télécopie depuis un télécopieur émetteur standard vers un télécopieur récepteur avec courrier électronique et disposant d'une boîte à lettres sur l'Internet, en transmettant la télécopie du télécopieur émetteur à un télécopieur-passerelle, à travers le réseau RTC, puis, par courrier électronique, du télécopieur-passerelle vers la boîte à lettres du télécopieur récepteur, à travers l'Internet.

On pourrait également envisager de transmettre une télécopie depuis un télécopieur émetteur avec courrier électronique et disposant d'un accès à l'Internet, vers un télécopieur standard en transmettant la télécopie par courrier électronique, du télécopieur émetteur vers un télécopieur-passerelle à travers l'Internet, puis du télécopieur-passerelle vers le télécopieur récepteur à travers le réseau RTC.

Dans une variante, la destination et l'identité de la télécopie, transmises avec la télécopie au télécopieur-passerelle 10 côté émission, sont indiquées par des séquences DTMF.

Dans la description qui vient d'être faite, les télécopieurs-passerelles de l'invention sont agencés pour se connecter à l'Internet 101 par connexion téléphonique, à travers le réseau RTC, à un fournisseur d'accès. On pourrait envisager d'autres types de connexion à l'Internet comme par exemple une connexion téléphonique à travers le réseau RNIS (Réseau Numérique à Intégration de Services), ou encore à titre d'exemple, une connexion directe.

## Revendications

1. Procédé de transmission d'une télécopie d'une boîte à lettres de transit (11') d'un réseau informatique tel que l'Internet (101) vers un télécopieur destinataire standard (10') d'un réseau téléphonique (100), procédé au cours duquel on télécharge la télécopie, rattachée à un courrier électronique, de la boîte à lettres de transit (11') sur un télécopieur-passerelle (10') d'où on la retransmet vers le télécopieur destinataire (12'), à travers le réseau téléphonique (100).

2. Procédé selon la revendication 1, dans lequel on décode la télécopie encodée selon un encodage de transport sur le réseau informatique avant de la retransmettre vers le télécopieur destinataire (12').

3. Procédé selon l'une des revendications 1 et 2, dans lequel on extrait la télécopie du courrier auquel elle est rattachée avant de la retransmettre vers le télécopieur destinataire (12').

4. Procédé selon l'une des revendications 1 à 3, dans lequel, ledit courrier contenant l'identité du télécopieur destinataire (12'), on saisit ladite identité, on la compare aux identités d'une pluralité de télécopieurs utilisateurs et on n'autorise la retransmission de la télécopie vers le télécopieur destinataire (12') que si celui-ci (12') est l'un desdits télécopieurs utilisateurs.

5. Télécopieur-passerelle (10'), pour la mise en oeuvre du procédé de la revendication 1, agencé pour transmettre vers un télécopieur destinataire standard (12') d'un réseau téléphonique (100), une télécopie rattachée à un courrier électronique stocké dans une boîte à lettres (11') d'un réseau informatique (101) tel que l'Internet, comprenant un automate de réception (2) agencé pour télécharger la télécopie rattachée au courrier électronique, un automate d'émission (8') agencé pour retransmettre la télécopie vers le télécopieur destinataire (12').

6. Télécopieur-passerelle selon la revendication 5, comportant un automate de préparation d'émission (7') comprend des moyens pour décoder la télécopie encodée suivant un encodage de transport sur le réseau informatique (101).

7. Télécopieur-passerelle selon la revendication 6, dans lequel l'automate de préparation d'émission (7') comprend des moyens pour extraire la télécopie du courrier auquel elle est rattachée.

8. Télécopieur-passerelle selon l'une des revendications 5 à 7, dans lequel ledit courrier contenant la destination de la télécopie, il est prévu un automate de filtrage (3') associé à un annuaire de télécopieurs utilisateurs (4') et agencé pour saisir la destination de la télécopie et pour n'autoriser sa retransmission vers le télécopieur destinataire (12') que si ledit télécopieur destinataire (12') est dans l'annuaire de télécopieurs utilisateurs (4').
